# EUROPEAN PATENT APPLICATION

(11) **EP 2 518 893 A1**
(43) Date of publication of application: **31.10.2012**
(21) Application number: 10839548.4
(22) Date of filing: 24.12.2010
(51) Int. Cl.: H02P 29/00, H02P 6/16

(54) **MALFUNCTIONING-FACTOR EVALUATION SUPPORTING APPARATUS AND SUBSTRATE EXCHANGING METHOD**

(30) Priority: 24.12.2009 JP 2009293051
(71) Applicant: Daikin Industries, Ltd., Osaka 530-8323 (JP)
(72) Inventor: IKEDA, Motonobu, Sakai-shi Osaka 591-8511 (JP)
(74) Representative: HOFFMANN EITLE
(86) International application number: PCT/JP2010/073318
(87) International publication number: WO 2011/078318

(57) **Abstract**

The unnecessary replacement of a motor—namely, when the motor has not failed— is prevented. A failure factor determination support apparatus **(13)** comprises an operating power supply unit **(14)** and a voltage detection unit **(15).** The operating power supply unit **(14)** generates an operating power supply and supplies such to a motor driver IC **(52),** which both controls the drive of a motor **(51)** and determines whether the motor **(51)** is in the faulty rotation state. The voltage detection unit **(15)** detects a voltage value (*Vcc*) of the operating power supply if the motor driver IC **(52)** has determined that the motor **(51)** is in the faulty rotation state.

## Description

### TECHNICAL FIELD

The present invention relates to a failure factor determination support apparatus. In addition, the present invention relates to a method of replacing a board in which a printed circuit board is replaced in the state wherein the printed circuit board, whereon the determination support apparatus is mounted, is connected to a motor.

### BACKGROUND ART

In the conventional art, a motor is often used as the drive source of various pieces of equipment, such as a fan or a ventilation fan. A motor drive apparatus, which comprises a drive control unit that generates and outputs a drive voltage for motor drive, rotationally drives the motor. The drive control unit and the like are usually mounted on a printed circuit board, which is usually connected to the motor.

Incidentally, among motor drive apparatuses, one is known that, while monitoring the rotational state of the motor, detects when the motor enters a faulty rotation, as disclosed in Patent Document 1 (i.e., Japanese Patent Unexamined publication No. 2001-268972).

### SUMMARY OF THE INVENTION

### <Technical Problem>

Nevertheless, even if the technology in the abovementioned Patent Document 1 is used, a serviceperson cannot make a determination until the motor enters the faulty rotation state because either the printed circuit board or the motor has failed. Accordingly, in the case wherein the printed circuit board has failed and the motor is normal, the serviceperson may first replace the motor and then, finding that the faulty rotation of the motor has not been resolved, further replace the printed circuit board, thereby incurring an unnecessary maintenance cost.

Accordingly, it is an object of the present invention to provide a failure factor determination support apparatus that can prevent the unnecessary replacement of the motor when the motor has not failed, and to provide a method of replacing the printed circuit board, whereon the determination support apparatus is mounted.

### <Solution to Problem>

A failure factor determination support apparatus according to a first aspect of the invention comprises an operating power supply unit and a voltage detection unit. The operating power supply unit applies an operating power supply to a drive control unit. The drive control unit controls the drive of a motor and determines whether the motor is in a faulty rotation state. The voltage detection unit detects the voltage value of the operating power supply at least when the drive control unit has determined that the motor is in the faulty rotation state.

In this failure factor determination support apparatus, at least when the motor is in the faulty rotation state, the voltage value of the operating power supply, which is the output of the operating power supply unit, is detected. In accordance with that voltage value, the failure factor determination support apparatus can determine whether the cause of the faulty rotation of the motor is on the operating power supply unit side or on the motor side. Accordingly, it is possible to avoid the unnecessary replacement of the motor when there is no failure on the motor side and thereby to avoid unnecessary maintenance costs.

A failure factor determination support apparatus according to a second aspect of the invention is the failure factor determination support apparatus according to the first aspect of the invention, and further comprises a detection result notification unit. When the detection result produced by the voltage detection unit is less than or equal to a prescribed value, the detection result notification unit reports that effect.

According to this failure factor determination support apparatus, at least when the motor is in the faulty rotation state, the serviceperson can easily ascertain whether the voltage value of the operating power supply is less than or equal to the prescribed value.

A failure factor determination support apparatus according to a third aspect of the invention is the failure factor determination support apparatus according to the first or second aspects of the invention, wherein the voltage detection unit comprises two resistors. The two resistors are connected to one another in series between an output wiring of the operating power supply unit and a GND wiring corresponding to the output wiring.

In this failure factor determination support apparatus, the detection of the voltage value of the operating power supply can be accomplished with a low-cost and simple configuration.

A failure factor determination support apparatus according to a fourth aspect of the invention is the failure factor determination support apparatus according to the first through third aspects of the invention, and further comprises a cutoff unit, a failure factor determination unit, and a determination result notification unit. The cutoff unit is capable of cutting off the supply of the operating power supply to the drive control unit. When the drive control unit has determined that the motor is in the faulty rotation state, the failure factor determination unit determines the failure factor based on the detection result of the voltage detection unit. Here, the detection result of the voltage detection unit is the voltage value of the operating power supply that is output from the operating power supply unit when the cutoff unit has cut off the supply of the operating power to the drive control unit. The determination result notification unit reports the determination result of the failure factor determination unit.

In this failure factor determination support apparatus, if the motor is in the faulty rotation state, then the supply of the operating power supply to the drive control unit is cut off. Furthermore, it is determined and reported whether the failure is on the motor side or on the printed circuit board, whereon the operating power supply unit is mounted, based on the voltage value of the operating power supply output from the operating power supply unit in the state wherein the operating power supply is not being supplied to the drive control unit. Thereby, the serviceperson does not have to determine whether the factor of the faulty rotation state of the motor is on the operating power supply unit side or on the motor side, and can promptly replace the failed motor or printed circuit board in accordance with the information reported by the determination result notification unit.

A board replacing method is a method wherein a printed circuit board is replaced in a state wherein the printed circuit board is connected to a motor. At least a failure factor determination support apparatus according to any one aspect of the first through third aspects of the invention is mounted on the printed circuit board. Furthermore, the board replacing method comprises a first step, a second step, a third step, a fourth step, a fifth step, and a sixth step. In the first step, whether the motor is in a faulty rotation state is determined. In the second step, a voltage value of an operating power supply is detected. In the third step, whether the voltage value of the operating power supply detected when it was determined that the motor is in the faulty rotation state is less than or equal to a prescribed value, is determined. In the fourth step, the printed circuit board and the motor are disconnected if the voltage value of the operating power supply is less than or equal to the prescribed value in the third step. In the fifth step, whether the voltage value of the operating power supply detected after the printed circuit board and the motor have been disconnected is less than or equal to the prescribed value, is determined. In the sixth step, the printed circuit board is replaced if the voltage value of the operating power supply is less than or equal to the prescribed value in the fifth step.

According to this board replacing method, if the voltage value of the operating power supply when the motor is in the faulty rotation state is less than or equal to the prescribed value and remains so even after the printed circuit board and the motor have been disconnected, then the faulty rotation factor of the motor can be determined to be on the printed circuit board side, which is the supply side of the operating power supply. Namely, according to this board replacing method, when the motor is in the faulty rotation state, it is possible to determine whether it is the printed circuit board or the motor that is failing; furthermore, if the failure is on the printed circuit board side, then the printed circuit board can be replaced. Accordingly, it is possible to eliminate the possibility that the motor will be unnecessarily replaced even though the failure is not on the motor side, thus making it possible to reduce cost.

### <Advantageous Effects of Invention>

According to the failure factor determination support apparatus of the first aspect of the invention, it is possible to avoid the unnecessary replacement of the motor when there is no failure on the motor and thereby to avoid unnecessary maintenance costs.

According to the failure factor determination support apparatus of the second aspect of the invention, at least when the motor is in the faulty rotation state, the serviceperson can easily ascertain whether the voltage value of the operating power supply is less than or equal to the prescribed value.

According to the failure factor determination support apparatus of the third aspect of the invention, the detection of the voltage value of the operating power supply can be accomplished with a low-cost and simple configuration.

According to the failure factor determination support apparatus of the fourth aspect of the invention, the serviceperson does not have to determine whether the factor of the faulty rotation state of the motor is on the operating power supply unit side or on the motor side, and can promptly replace the failed motor or printed circuit board in accordance with the information reported by the determination result notification unit.

According to the board replacing method of the fifth aspect of the invention, it is possible to eliminate the possibility that the motor will be unnecessarily replaced even though the failure is not on the motor, thus making it possible to reduce cost.

### BRIEF DESCRIPTION OF THE DRAWINGS

**FIG 1** is an overall block diagram of a motor drive apparatus, which comprises a failure factor determination support apparatus, and a motor drive system according to a first embodiment.
**FIG. 2** is a flow chart of the overall flow of a method of replacing a printed circuit board, whereon the motor drive apparatus is mounted, according to the first embodiment.
**FIG. 3** is a flow chart of the overall flow of the method of replacing the printed circuit board, whereon the motor drive apparatus is mounted, according to the first embodiment.
**FIG. 4** is a diagram of the entire motor drive system for the case wherein the printed circuit board according to the first embodiment is disconnected from a motor apparatus.
**FIG. 5** is an overall block diagram of the motor drive apparatus and the motor drive system according to a modified example (c) of the first embodiment.
**FIG. 6** is an overall block diagram of the motor drive apparatus, which comprises the failure factor determination support apparatus, and the motor drive system, according to a second embodiment.
**FIG. 7** is a flow chart of the overall flow of the failure factor determination support apparatus according to the second embodiment.
**FIG. 8** is a flow chart of the overall flow of the failure factor determination support apparatus according to the second embodiment.
**FIG. 9** is a schematic diagram of a system that comprises a failure factor determination support apparatus and the like according to a modified example (a) of the second embodiment.

### DESCRIPTION OF EMBODIMENTS

A failure factor determination support apparatus and a board replacing method according to the present invention are explained below in detail, referencing the drawings.

### <First Embodiment>

### (1) Overall Configuration

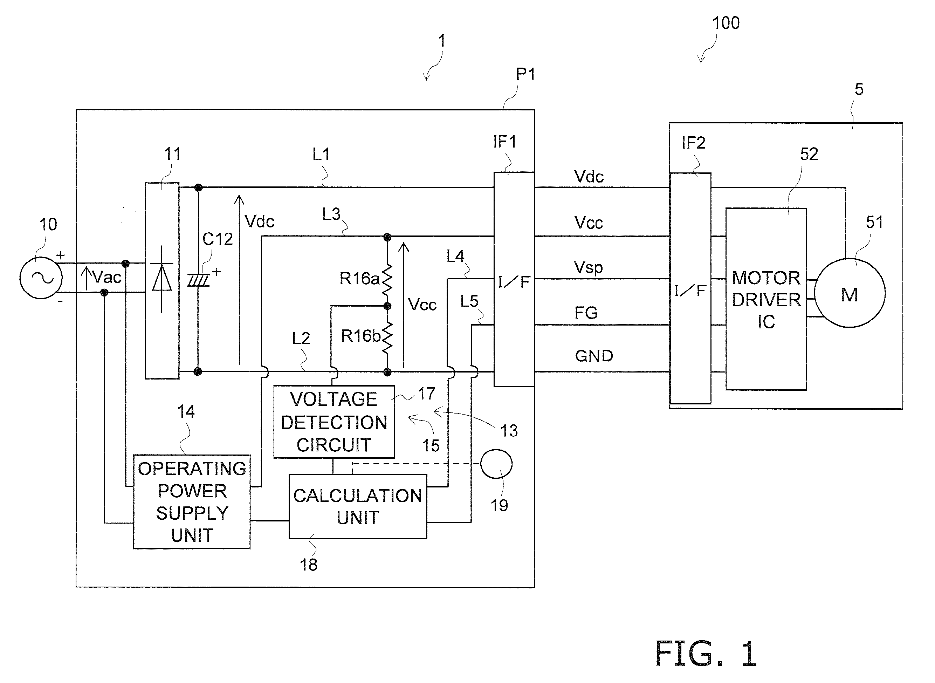

**FIG 1** is an overall block diagram of a motor drive system **100** according to the present embodiment. The motor drive system **100** comprises a motor apparatus **5** and a motor drive apparatus **1,** which is for driving a motor **51** in the motor apparatus **5.**

### (1-1) Motor Apparatus

The motor apparatus **5** is a drive source of an outdoor fan (not shown) related to an outdoor unit of an air conditioner, and comprises the motor **51** and a motor driver IC **52** (which corresponds to a drive control unit).

The motor **51** is, for example, a three-phase brushless DC motor and specifically comprises a rotor, a stator, and a plurality of Hall devices. The rotor comprises a plurality of permanent magnets having magnetic poles. The stator comprises a drive coil. The Hall device output rotor position detection signal (more specifically, signal that indicate the position of the rotor with respect to the stator).

The motor driver IC 52 is for rotationally driving the motor **51.** The motor driver IC **52** controls the drive of the motor **51** by outputting to the motor **51** drive voltages in accordance with the position of the rotor with respect to the stator. In addition, based on the rotor position detection signals output from the motor **51,** the motor driver IC **52** generates a rotational speed signal FG, which indicates the actual rotational speed of the motor **51,** and outputs the rotational speed signal FG to a printed circuit board **P1** side.

Furthermore, based on the rotor position detection signals, the motor driver IC **52** according to the present embodiment determines whether the motor **51** is in a state of faulty rotation. The motor driver IC **52** computes the actual rotational speed of the motor **51** based on the rotor position detection signals and, if the computed rotational speed is less than or equal to a prescribed rotational speed, determines that the motor **51** is in a faulty rotation state.

The faulty rotation state of the motor **51** herein includes a completely locked state and an incompletely locked state, The completely locked state is case that the motor **51** does not rotate at all even though drive voltages are output from the motor driver IC **52.** The incompletely locked state is case that a bearing has broken because a wiring or the like has become entangled in the motor **51** and therefore the motor **51** rotates at a rotational speed that is significantly below the rotational speed specified by a rotational speed instruction. Furthermore, the faulty rotation state spoken of herein includes the case wherein, in actuality, the motor driver IC **52** itself is at fault and not the motor **51** inside the motor apparatus **5,** and therefore it is mistakenly determined that the motor **51** is in a faulty rotation state.

Accordingly, it is the motor driver IC **52** that determines the faulty rotation state of the motor **51** discussed above; for example, if the rotational speed of the motor **51** in the steady rotation state is approximately 2,000 rpm, then the prescribed rotational speed is set in advance, by desktop calculation and the like, to be approximately 800 rpm, 60 rpm, or the like. If the motor **51** is in the faulty rotation state (namely, if the actual rotational speed of the motor **51** is less than or equal to the prescribed rotational speed), then the motor driver IC **52** sets the rotational speed signal *FG*, which is output to the printed circuit board **P1,** to "0" or an error value, which indicate the faulty rotation state. If the motor **51** is not in the faulty rotation state (namely, if the actual rotational speed of the motor **51** is greater than or equal to the prescribed rotational speed), then the motor driver IC **52** outputs—as the rotational speed signal *FG*—a signal that indicates the present actual rotational speed of the motor **51** to a printed circuit board **P1** side. Accordingly, the rotational speed signal FG according to the present embodiment can be said to be both a signal that indicates the actual rotational speed of the motor **51** and a signal that indicates whether the motor **51** is in the faulty rotation state.

### (1-2) Motor Drive Apparatus

The motor drive apparatus **1** principally comprises a full-wave rectifier unit **11,** a smoothing capacitor **C12,** and a failure factor determination support apparatus **13** (hereinbelow, denoted simply as the determination support apparatus **13).** These functional units, which constitute the motor drive apparatus **1,** are mounted on the singular printed circuit board **P1.**

Normally, including the state wherein the motor **51** is rotating steadily, the printed circuit board **P1** is connected to the motor apparatus **5** by a plurality of harnesses, which connects interfaces **IF1, IF2,** and these harnesses can be detached from the interfaces **IF1, IF2** quite simply. Accordingly, when a serviceperson wishes to confirm, for example, whether the motor drive system **100** has failed, the serviceperson detaches the plurality of harnesses, and thereby disconnects the printed circuit board **P1** from the motor apparatus **5.** Furthermore, after the confirmation of whether the motor drive system **100** has failed, the plurality of harnesses can be attached quite simply to the interfaces **IF1, IF2,** and the printed circuit board **P1** is thereby reconnected to the motor apparatus **5.**

The full-wave rectifier unit **11** comprises a plurality of diodes arranged in a bridge, and is connected to output terminals of an external power supply **10,** which is a commercial power supply. When the full-wave rectifier unit **11** inputs a power supply voltage *Vac* (specifically, an AC voltage) from the external power supply **10,** the full-wave rectifier unit **11** rectifies the power supply voltage *Vac* and outputs it to a first wiring **L1** and a second wiring **L2.**

One end of the smoothing capacitor **C12** is connected to the first wiring **L1,** and an other end is connected to the second wiring **L2.** In addition, the smoothing capacitor **C12** is connected to the full-wave rectifier unit **11** via the first wiring **L1** and the second wiring **L2.** The smoothing capacitor **C12** converts the power supply voltage *Vac,* which has been rectified by the full-wave rectifier unit **11,** to a DC voltage *Vdc.* This DC voltage *Vdc* is output to the motor apparatus **5** via the first wiring **L1** and the interface **IF1** of the printed circuit board **P1.**

The determination support apparatus **13** is installed inside the motor drive apparatus **1** in order to enable the determination support apparatus **13** to determine, in the event the motor driver IC **52** determines that the motor **51** is in a faulty rotation state, whether the failure factor is on the motor apparatus **5** side or on the printed circuit board **P1** side. The details of the determination support apparatus **13** are discussed below.

### (2) Configuration of the Failure Factor Determination Support Apparatus

The determination support apparatus **13** according to the present embodiment principally comprises an operating power supply unit **14,** a voltage detection unit **15,** a calculation unit **18,** and a light emitting diode **19** (which corresponds to a detection result notification unit).

The operating power supply unit **14** is connected to the output terminals of the external power supply **10,** and is connected to the motor apparatus **5** via a third wiring **L3** (which corresponds to an output wiring) and the interface **IF1.** Based on the power supply voltage *Vac* output from the external power supply **10,** the operating power supply unit **14** generates an operating power supply of the motor driver IC **52** and supplies the operating power supply to the motor apparatus **5** via the third wiring **L3.** The operating power supply unit **14,** which performs such an operation, comprises, for example, a switching power supply.

The voltage detection unit **15** detects a voltage value *Vcc* of the operating power supply generated by the operating power supply unit **14.** Specifically, the voltage detection unit **15** comprises two resistors **R16a, R16b** and a voltage detection circuit **17.** The two resistors **R16a, R16b** are connected in series between the third wiring **L3,** whereto the operating power supply is impressed, and the second wiring **L2,** which is a GND wiring corresponding to the third wiring **L3.** Although not shown, the voltage detection circuit **17** comprises, for example, an op-amp, an A/D converter, and the like. The voltage detection circuit 17 is connected to a connection point between the resistors **R16a, R16b** and a calculation unit **18,** amplifies the voltage value at the connection point between the resistors **R16a, R16b** at a prescribed gain, A/D converts the amplified voltage, and outputs such to the calculation unit **18.**

In particular, when the motor driver IC **52** determines that the motor **51** is in a faulty rotation state, the voltage detection unit **15** according to the present embodiment detects the voltage value *Vcc* of the operating power supply. Furthermore, the voltage detection unit **15** detects the voltage value *Vcc* of the operating power supply once again when the motor apparatus **5** and the printed circuit board **P1** have been disconnected from one another after that determination is made.

The calculation unit **18** comprises a microcomputer, which comprises memory and a CPU, and is connected to the motor apparatus **5** via a fourth wiring **L4** and a fifth wiring **L5.** The calculation unit **18** generates a velocity instruction signal *Vsp* for the motor **51** and outputs this signal *Vsp* to the motor apparatus **5** via the fourth wiring **L4.** In addition, when the calculation unit **18** acquires the rotational speed signal *FG*, which indicates the present rotational speed of the motor **51,** via the fifth wiring **L5,** the calculation unit **18** corrects the velocity instruction signal *Vsp* based on the acquired rotational speed signal *FG* and outputs the corrected velocity instruction signal *Vsp* once again to the motor apparatus **5.** Namely, the calculation unit **18** performs feedback control on the velocity instruction signal *Vsp* based on the actual rotational speed of the motor **51.**

Furthermore, the calculation unit **18** is connected to the light emitting diode **19,** and controls the light emission of the light emitting diode **19** based on the detection result of the voltage detection unit **15.** Specifically, if the detection result of the voltage detection unit **15** is less than or equal to the prescribed value, then the calculation unit **18** causes the light emitting diode **19** to emit light. Conversely, if the detection result of the voltage detection unit **15** is greater than or equal to the prescribed value, then the calculation unit **18** causes the light emitting diode **19** to stop emitting light.

Accordingly, by emitting light, the light emitting diode **19** can indicate to the serviceperson that the voltage value *Vcc* of the operating power supply is less than or equal to the prescribed value. Conversely, by not emitting light, the light emitting diode **19** can indicate to the serviceperson that the voltage value *Vcc* of the operating power supply is greater than or equal to the prescribed value. Furthermore, the prescribed value might be the minimum value of the voltage range of the operating power supply at which the motor driver IC **52** can operate normally (namely, the rated voltage of the operating power supply *Vcc*), and that prescribed value can be set as appropriate by desktop calculation, simulation, experiment, and the like.

Furthermore, specifically, in the present embodiment, the light emitting diode **19** assumes a light emitting state or a light emitting stop state in accordance with the state of connectivity between the motor apparatus **5** and the printed circuit board **P1.** Therefore the serviceperson can easily ascertain whether the faulty rotation state factor of the motor **51** lies on the printed circuit board **P1** side, whereon the operating power supply unit **14** is mounted, because the voltage value *Vcc* of the operating power supply is low, or on the motor **51** side, or is caused by some other factor. For example, when the motor apparatus **5** and the printed circuit board **P1** are connected, the light emitting diode **19** emits light. When the motor apparatus **5** and the printed circuit board **P1** are disconnected, however, the light emitting diode **19** does not emit light, and if the output of the operating power supply unit **14** is under no-load, then the voltage value *Vcc* is a normal value, and therefore there is no failure on the printed circuit board **P1** side and some failure factor is understood to be on the motor apparatus **5** side. In addition, if the light emitting diode **19** emits light even when the motor apparatus **5** and the printed circuit board **P1** are disconnected, then the voltage value *Vcc* drops even though the output of the operating power supply unit **14** is under no-load, and therefore it is understood that there is no failure on the motor apparatus **5** side and some failure factor on the printed circuit board **P1** side. Thus, in the present embodiment, the serviceperson can easily determine the failure factor of the motor drive system **100** by visually ascertaining the detection result of the voltage detection unit **15** via the light emitting diode **19.**

### (3) Operation

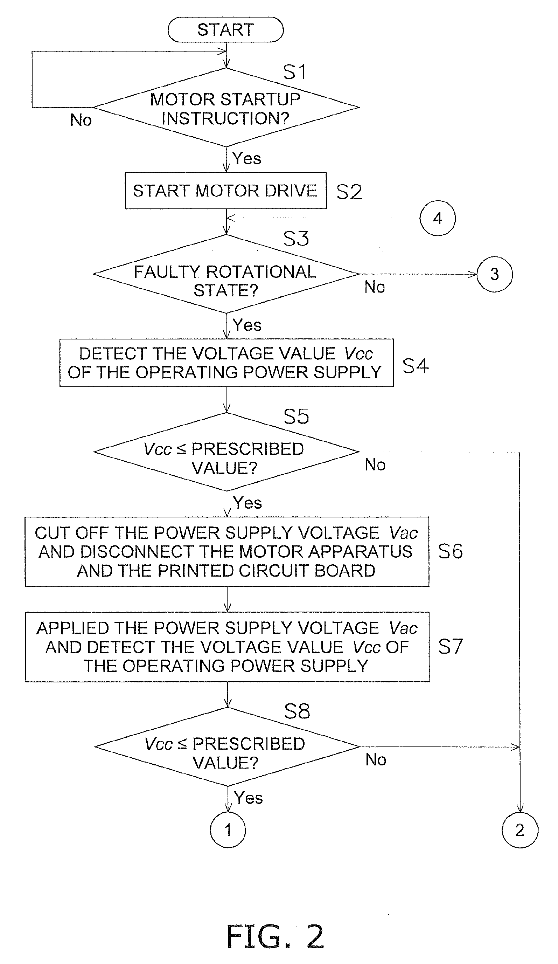

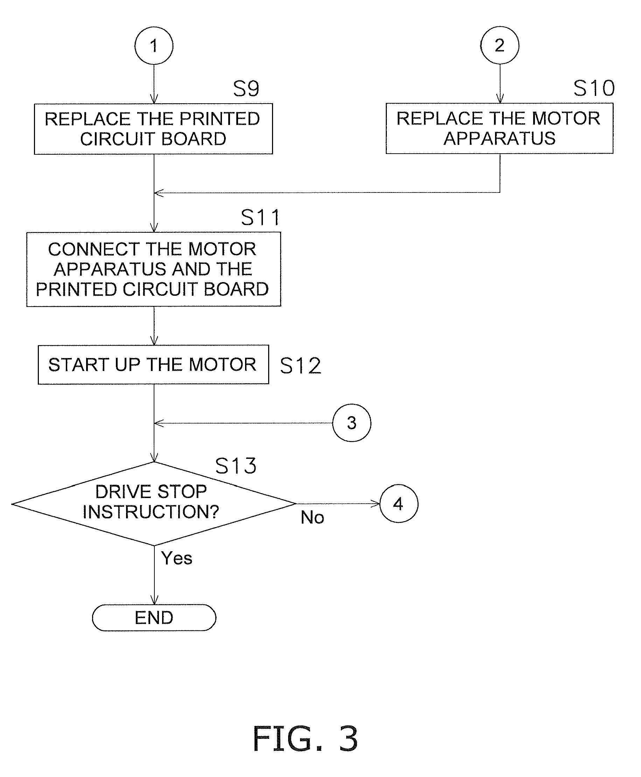

Next, the flow of a method of replacing the printed circuit board **P1** using the determination support apparatus **13** discussed above will be explained. **FIGS. 2****,** **3** are flow charts that describe the overall flow of the board replacing method.

Steps **S1-S2**: As shown in **FIG 1****,** the printed circuit board **P1** and the motor apparatus **5** are connected by a plurality of harnesses, and the power supply voltage *Vac* from the external power supply **10** is applied to the printed circuit board **P1**. In this state, if the motor drive apparatus **1** receives a startup instruction for the motor **51** (i.e., YES in **S1)** from the microcomputer (not shown), then the calculation unit **18** of the motor drive apparatus **1** starts outputting the velocity instruction signal *Vsp* to the motor apparatus **5.** The motor driver IC **52** of the motor apparatus **5** starts generating the drive voltages based on the velocity instruction signal *Vsp,* and the motor **51** starts the drive (i.e., **S2).**

Steps **S3-S4:** When the motor **51** is driving, the motor driver IC **52** monitors the rotational state of the motor **51** and generates the rotational speed signal FG. If the motor **51** enters the faulty rotation state while driving, the motor driver IC **52** outputs to the motor drive apparatus **1** the rotational speed signal FG that indicates that the motor **51** is in the faulty rotation state (i.e., YES in **S3).** At this time, the voltage detection unit **15** detects the voltage value *Vcc* of the operating power supply (i.e., **S4).**

Furthermore, if the motor **51** does not enter the faulty rotation state (NO in **S3),** then the motor driver IC **52** continues to output to the motor drive apparatus **1** the rotational speed signal FG that indicates the actual rotational speed of the motor **51.** In this case, as long as a drive stop instruction for the motor **51** is not received from the microcomputer (not shown) (NO in **S13),** the calculation unit **18** continues to output to the motor apparatus **5** the velocity instruction signal *Vsp* for causing the motor **51** to rotate in a steady state.

Step **S5:** If the motor driver IC **52** determines, in the step **S3,** that the motor **51** is in the faulty rotation state, then the calculation unit **18** compares the voltage value *Vcc* of the operating power supply to the prescribed value.

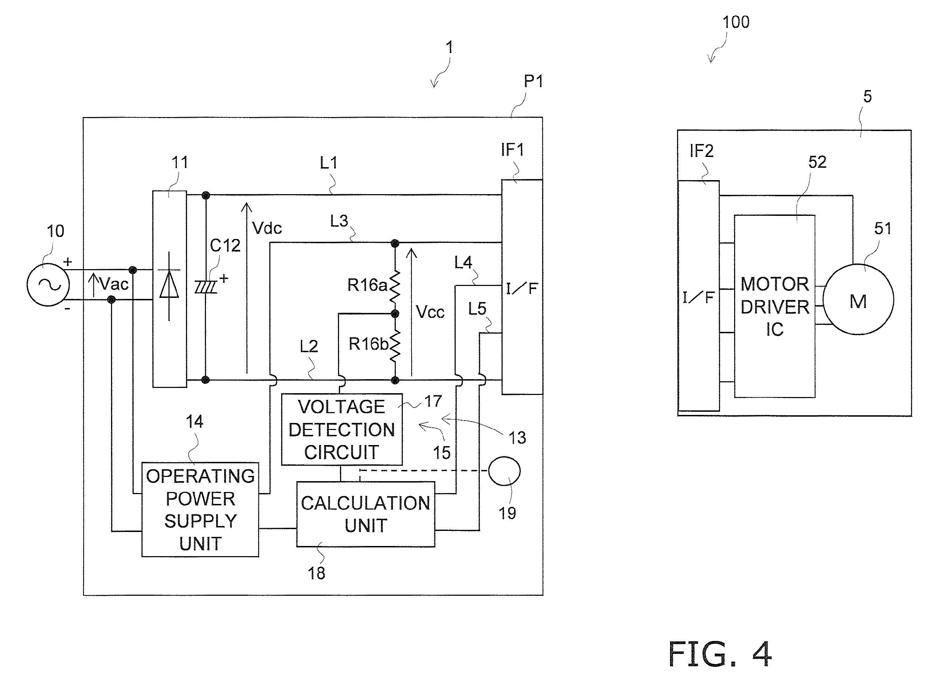

Step **S6:** If in step **S5** the voltage value *Vcc* of the operating power supply is less than or equal to the prescribed value (i.e., YES in **S5),** then the light emitting diode **19** emits light and consequently the serviceperson cuts off the supply of the power supply voltage *Vac* from the external power supply **10** to the printed circuit board **P1.** After cutting off the power supply voltage *Vac,* the serviceperson disconnects the plurality of harnesses that connect the motor apparatus **5** and the printed circuit board **P1,** as shown in **FIG. 4**, and thereby sets the motor apparatus **5** and the printed circuit board **P1** to the disconnected state.

Furthermore, if, in the step **S5,** the voltage value *Vcc* of the operating power supply is greater than or equal to the prescribed value (i.e., NO in **S5),** then the light emitting diode **19** does not emit light, and consequently the serviceperson does not perform the operation of steps **S6, S7,** and can determine that the failure factor of the motor drive system **100** (specifically, the faulty rotation of the motor **51)** lies on the motor apparatus **5** side and not on the printed circuit board **P1** side. In this case, the serviceperson replaces the motor apparatus **5** (i.e., **S10)** and does not replace the printed circuit board **P1.**

Step **S7:** In the state wherein the supply of the power supply voltage *Vac* to the printed circuit board **P1** is cut off, the voltage detection unit **15** detects the voltage value *Vcc* of the operating power supply.

Step **S8:** The calculation unit **18** once again compares the voltage value *Vcc* of the operating power supply, which was detected in the step **S7,** and the prescribed value (i.e., **S8).**

Step **S9:** In the step **S8,** if the voltage value *Vcc* of the operating power supply is still lower than or equal to the prescribed value (i.e., YES in **S8),** then the light emitting diode **19** once again emits light. Thereby, because the voltage value *Vcc* of the operating power supply remains low regardless of the state of connectivity between the motor apparatus **5** and the printed circuit board **P1,** the serviceperson can determine that the failure factor of the motor drive system **100** is on the printed circuit board **P1** side. In this case, the serviceperson replaces the printed circuit board **P1** and does not replace the motor apparatus **5.**

Step **S10:** If, in the step **S8,** the voltage value *Vcc* of the operating power supply is greater than or equal to the prescribed value (i.e., NO in **S8),** then the light emitting diode **19** does not emit light. Thereby, if the motor apparatus **5** and the printed circuit board **P1** are in a disconnected state, then the voltage value *Vcc* of the operating power supply is normal, and therefore the serviceperson can determine that the failure factor of the motor drive system **100** is on the motor apparatus **5** side, which is the load side of the operating power supply. In this case, the serviceperson replaces the motor apparatus **5** and does not replace the printed circuit board **P1.**

Step **S11**: After the motor apparatus **5** or the printed circuit board **P1** has been replaced, the serviceperson connects the motor apparatus **5** and the printed circuit board **P1** via the plurality of harnesses (i.e., **S11),** as shown in **FIG. 1****,** and subsequently the power supply voltage *Vac* is applied to the printed circuit board **P1**.

Step **S12:** Subsequently, to restart the motor **51,** the calculation unit **18** of the motor drive apparatus **1** generates the velocity instruction signal *Vsp* and outputs such to the motor apparatus **5.**

Step **S13:** The operations of the step **S3** and subsequent steps are performed repetitively (i.e., NO in **S13)** until the microcomputer (not shown) sends a drive stop instruction for the motor **51.** When a drive stop instruction for the motor **51** has been received, a velocity instruction signal *Vsp* for stopping the drive of the motor **51** is sent from the calculation unit **18** to the motor apparatus **5,** whereupon the motor **51** stops the drive.

### (4) Effects

### (A)

In the determination support apparatus **13** according to the present embodiment, if the motor **51** is in the faulty rotation state, then the voltage value *Vcc* of the operating power supply, which is the output of the operating power supply unit **14,** is detected. In accordance with that voltage value *Vcc,* the determination support apparatus **13** can determine whether the faulty rotation factor of the motor **51** is on the printed circuit board **P1** side, which includes the operating power supply unit **14,** or on the motor apparatus **5** side. Accordingly, it is possible to avoid the unnecessary replacement of the motor apparatus **5** when there is no failure on the motor apparatus **5** side and thereby to avoid unnecessary maintenance costs.

### (B)

In addition, in the present embodiment, the light emitting diode **19,** which emits light in the event that the detection result produced by the voltage detection unit **15** is less than or equal to the prescribed value, is mounted on the printed circuit board **P1.** Consequently, if the motor **51** is in the faulty rotation state, then the serviceperson can easily ascertain whether the voltage value *Vcc* of the operating power supply is less than or equal to the prescribed value.

### (C)

In addition, in the present embodiment, the voltage detection unit **15** has a simple configuration comprising the two resistors **R16a, R16b** and the like, and therefore the detection of the voltage value *Vcc* of the operating power supply can be implemented at low cost.

### (D)

Furthermore, in the board replacing method described in **FIGS. 2****,** **3****,** the failure factor determination support apparatus **13** discussed above is used. Specifically, according to the board replacing method, if the voltage value V*cc* of the operating power supply when the motor **51** is in the faulty rotation state is less than or equal to the prescribed value and remains so even after the printed circuit board **P1** and the motor apparatus **5** have been disconnected, then the faulty rotation factor of the motor **51** can be determined to be on the printed circuit board **P1** side, which is the side where the operating power supply is supplied. Namely, according to this board replacing method, when the motor **51** is in the faulty rotation state, it is possible to determine whether it is the printed circuit board **P1** or the motor **51** that is failing; furthermore, if the failure is on the printed circuit board **P1** side, then the printed circuit board **P1** can be replaced and the motor apparatus **5** is not replaced. Accordingly, it is possible to eliminate the possibility that the motor apparatus **5** will be unnecessarily replaced even though the failure is not on the motor apparatus **5** side, thus making it possible to reduce cost.

Furthermore, in the board replacing method according to the present embodiment, in the step **S8** in **FIG. 2****,** if the voltage value *Vcc* of the operating power supply is greater than or equal to the prescribed value (i.e., NO in **S8),** then the motor apparatus **5** is replaced and the printed circuit board **P1** is not (i.e., **S10).** This is because the fact that the voltage value *Vcc* of the operating power supply is less than or equal to the prescribed value in the state wherein the printed circuit board **P1** and the motor apparatus **5** are connected and becomes greater than or equal to the prescribed value when the printed circuit board **P1** and the motor apparatus **5** are disconnected makes it possible to determine that the printed circuit board **P1** is normal and the motor apparatus **5** has failed. Consequently, in the board replacing method according to the present embodiment, it is possible to replace the motor apparatus **5** only when necessary. In addition, even in the scenario wherein the motor **51** has not failed and is still rotating but it is mistakenly determined that the motor **51** is in the faulty rotation state because the motor driver IC **52** has failed, this scenario can be prevented from recurring after the motor apparatus **5** has been replaced.

Furthermore, in the steps **S3, S4** in **FIG 2****,** in the state wherein the power supply voltage *Vac* is supplied from the external power supply **10** to the printed circuit board **P1,** it is determined whether the motor apparatus **5** is in the faulty rotation state and the voltage value *Vcc* of the operating power supply is detected. In the step **S5,** if the voltage value *Vcc* of the operating power supply is less than or equal to the prescribed value, then, before the printed circuit board **P1** and the motor apparatus **5** are disconnected, the supply of the power supply voltage *Vac* to the printed circuit board **P1** is cut off (i.e., **S6).** Furthermore, in the step **S6,** after the printed circuit board **P1** and the motor apparatus **5** have been disconnected, the power supply voltage *Vac* of the printed circuit board **P1** is supplied prior to the detection of the voltage value *Vcc* of the operating power supply. Namely, in the board replacing method according to the present embodiment, the supply of the power supply voltage *Vac* to the printed circuit board **P1** is cut off before the printed circuit board **P1** and the motor apparatus **5** are disconnected. Consequently, the printed circuit board **P1** and the motor apparatus **5** can be disconnected safely.

### (5) Modified Example

### (a)

The present embodiment explained the case wherein, as shown in **FIG. 1**, the failure factor determination support apparatus **13** comprises the light emitting diode **19,** which emits light if the voltage value *Vcc* of the operating power supply is less than or equal to the prescribed value. However, the means for communicating to the serviceperson that the voltage value *Vcc* of the operating power supply is less than or equal to the prescribed value is not limited to the light emitting diode **19,** and may be any type of means. Examples of means other than the light emitting diode **19** include: a display unit that is mounted on the printed circuit board **P1;** a display unit of a remote controller for an indoor unit of the air conditioner; and the like. In such a case, a code, a message, or the like that indicates that the voltage value *Vcc* of the operating power supply is less than or equal to the prescribed value is displayed on the display unit.

In addition, the fact that the voltage value *Vcc* of the operating power supply is less than the prescribed value may be reported by sound, such as by a buzzer or speech, instead of visually, or may be reported by a combination of sound and, for example, a light emitting diode or a display unit.

### (b)

The present embodiment explained a case wherein the light emitting diode **19** emits light if the voltage value *Vcc* of the operating power supply is less than or equal to the prescribed value but does not emit light if the voltage value *Vcc* is greater than or equal to the prescribed value. However, in contrast, the light emitting diode **19** may emit light only when the voltage value *Vcc* of the operating power supply is greater than or equal to the prescribed value. In addition, it may be that the luminous color of the light emitting diode **19** changes when the voltage value *Vcc* is less than or equal to the prescribed value.

### (c)

The present embodiment explained a case wherein the motor **51** and the motor driver IC **52** are provided inside the motor apparatus **5** (namely, the case wherein the motor is a driver-integrated motor). However, the determination support apparatus **13** according to the present embodiment can be adapted not only to a driver-integrated motor but also to the case wherein the motor and the motor driver are provided separately.

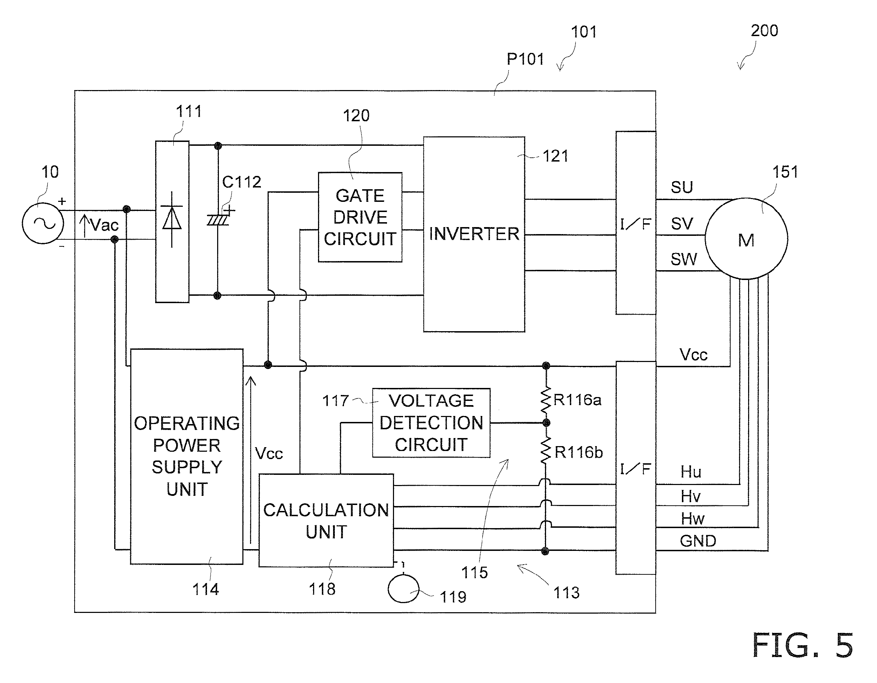

**FIG. 5** is an overall block diagram of a motor drive system **200,** wherein the motor and the motor driver are provided separately. The motor drive system **200** comprises a motor **151** and a motor drive apparatus **101.** In the system **200** of **FIG. 5****,** a gate drive circuit **120** and an inverter **121** are used instead of the motor driver IC **52** of **FIG. 1****.** The gate drive circuit **120** and the inverter **121** are mounted, together with a failure factor determination support apparatus **113** (hereinbelow, denoted as the determination support apparatus **113)** on a printed circuit board **P101.**

Specifically, the motor **151,** like the motor **51** according to the abovementioned embodiment, is a three-phase brushless DC motor and, although not shown, comprises a rotor, a stator, and a plurality of Hall devices.

In addition, the motor drive apparatus **101** is mounted on the printed circuit board **P101** and comprises a full-wave rectifier unit **111,** a smoothing capacitor **C112,** the failure factor determination support apparatus **113,** a calculation unit **118,** the gate drive circuit **120,** and the inverter **121.** Furthermore, the full-wave rectifier unit **111** and the smoothing capacitor **C112** are the same as the full-wave rectifier unit **11** and the smoothing capacitor **C12** according to the abovementioned embodiment. In addition, the determination support apparatus **113** comprises an operating power supply unit **114,** a voltage detection unit **115,** and a light emitting diode **119.** The voltage detection unit 115 comprises resistors **R116a, R116b** and a voltage detection circuit **117.** The operating power supply unit **114,** the voltage detection unit **115,** and the light emitting diode **119** are the same as the operating power supply unit **14,** the voltage detection unit **15,** and the light emitting diode **19** according to the abovementioned embodiment.

The calculation unit **118** is connected to the gate drive circuit **120** and the voltage detection unit **115** inside the printed circuit board **P101** and is connected to the motor **151** outside of the printed circuit board **P101** via an interface. Based on rotor position detection signals *Hu, Hv, Hw* output from the motor **151,** the calculation unit **118** generates a velocity instruction signal for the motor **151** and outputs the signal to the gate drive circuit **120.**

The gate drive circuit **120** is for the purpose of turning switching devices inside the inverter **121** on and off. When the drive power supply is supplied from the operating power supply unit **114,** the gate drive circuit **120** generates a gate control signal based on the velocity instruction signal from the calculation unit **118.**

The inverter **121** comprises a plurality of switching devices. The inverter **121** generates drive voltages *SU, SV, SW* based on the gate control signal sent from the gate drive circuit **120** when the operating power supply supplied from the operating power supply unit **114.** And the inverter 121 outputs the drive voltages *SU, SV, SW* to the motor **151.**

Furthermore, the calculation unit **118,** the gate drive circuit **120,** and the inverter **121** function as the drive control unit according to the present invention, and the determination of whether the motor **151** is in the faulty rotation state is made based on the position detection signals *Hu, Hv, Hw.* If it is determined that the motor **151** is in the faulty rotation state, then the light emitting diode **119** emits light. Furthermore, when the motor **151** is normal and is rotating, the light emitting diode **119** does not emit light.

In the motor drive system **200** shown in **FIG. 5****,** too, the board replacing method explained referencing **FIGS. 2****,** **3** in the abovementioned embodiment is adopted. Namely, by performing the board replacing method according to the abovementioned embodiment using the motor drive system **200,** the serviceperson can determine the failure factor based on whether the light emitting diode **119** is emitting light. Accordingly, either the printed circuit board **P101** or the motor **151** is replaced selectively.

### (d)

The present embodiment explained the case wherein the voltage value *Vcc* of the operating power supply is detected at timing that the steps **S4, S7,** as shown in **FIG. 2****,** are performed. However, the timing with which the voltage detection unit **15** detects the voltage value *Vcc* of the operating power supply is not limited thereto; for example, the voltage detection unit **15** may detect the voltage value *Vcc* of the operating power supply continuously. However, in this case, when determining the failure factor, at a minimum the voltage value when the motor **51** has been determined to be in the faulty rotation state and the voltage value when the motor apparatus **5** and the printed circuit board **P1** have been disconnected are used.

### (e)

The present embodiment explained that the determination of whether the motor **51** is in the faulty rotation state is made based on the rotor position detection signals. However, the determination of whether the motor **51** is in the faulty rotation state may be made based on not only the rotor position detection signals but also, for example, on the condensing temperature of the refrigerant that circulates inside the refrigerant circuit, which is configured inside the air conditioner.

In addition, the motor drive apparatus **1,** which comprises the determination support apparatus **13** according to the present embodiment, can be adapted to a compressor motor as well as to an outdoor fan motor.

### <Second Embodiment>

### (1) Overview and Configuration of the Motor Drive Apparatus

The first embodiment explained a case wherein the serviceperson performs the processes in the steps **S6, S7** of **FIG. 2** and determines whether the failure factor is in the printed circuit board **P1** or the motor apparatus **5.** The present embodiment explains a case wherein these processes are performed automatically.

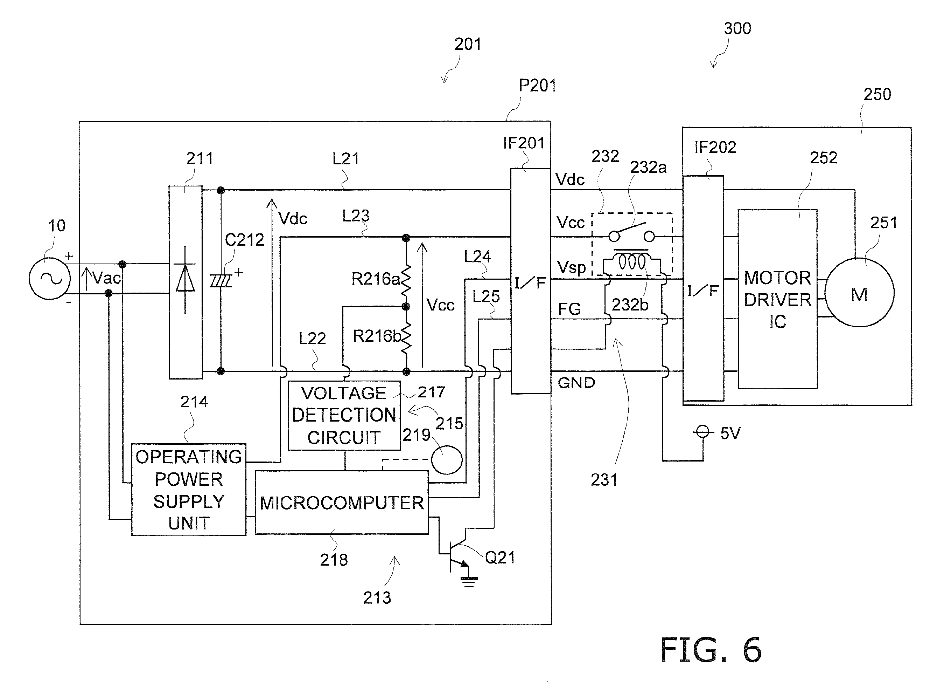

**FIG. 6** is an overall block diagram of a motor drive system **300** that comprises as a constituent element a motor drive apparatus **201,** which comprises a determination support apparatus **213,** according to the present embodiment. The motor drive system **300** comprises the motor drive apparatus **201** and a motor apparatus **250.**

Furthermore, as in the first embodiment, the present embodiment is an exemplary case of a so-called driver-integrated motor, wherein a motor **251** and a motor driver IC **252** (which corresponds to a drive control unit) are both included in the motor apparatus **250.** Namely, the motor **251** is a three-phase brushless DC motor that comprises a rotor, a stator, and Hall devices, and is used as the drive source of an outdoor fan that constitutes an air conditioner. The motor driver IC **252** outputs drive voltages to the motor **251** and thereby controls the drive of the motor **251.**

In addition, the motor driver IC **252** determines whether the motor **251** is in the faulty rotation state based on the rotor position detection signals output from the motor **251.** Here, the faulty rotation state of the motor **251** includes, as in the first embodiment, the completely locked state wherein the motor **251** is not rotationg at all and the incompletely locked state wherein the motor **251** is rotationg at a rotational speed that is far lower than or equal to the rotational speed specified in the rotational speed instruction, and further includes the case wherein the motor **251** is mistakenly determined to be in the faulty rotation state because the motor driver IC **252** itself is faulty. Accordingly, if the actual current rotational speed of the motor **251** is less than or equal to the prescribed rotational speed, then the motor driver IC **252** determines that the motor **251** is in the faulty rotation state and sets the rotational speed signal *FG,* which is output to a printed circuit board **P201** side, to "0" or an error value, which indicates the faulty rotation state. If the actual rotational speed of the motor **251** is greater than or equal to the prescribed value, then the motor driver IC **252** determines that the motor **251** is not in the faulty rotation state and outputs to the printed circuit board **P201** side a value that indicates the actual current rotational speed of the motor **251** as the rotational speed signal *FG.* Namely, in the present embodiment, the rotational speed signal *FG* can be said to be both a signal that represents the actual rotational speed of the motor **251** and a signal that represents whether the motor **251** is in the faulty rotation state.

The motor drive apparatus **201** principally comprises a full-wave rectifier unit **211,** a smoothing capacitor **C212,** and the failure factor determination support apparatus **213** (hereinbelow, called the determination support apparatus **213).** With the exception of one part, these functional units, which constitute the motor drive apparatus **201,** are mounted on the singular printed circuit board **P201.** Furthermore, normally, including when the motor **251** is rotating in a steady state, the printed circuit board **P201** is connected to the motor apparatus **250** by a plurality of harnesses, which connect interfaces **IF201, IF202** together, and these harnesses can be detached from the interfaces **IF201, IF202** simply. In the present embodiment, these harnesses connect the printed circuit board **P201** and the motor apparatus **250,** excludes the case wherein the serviceperson detaches the harnesses when replacing the failed motor apparatus **250** or printed circuit board **P201.** Namely, in the present embodiment, unlike in the first embodiment, the printed circuit board **P201** is in a state wherein it is connected to the motor apparatus **250** when it is being verified whether the motor apparatus **250** or the printed circuit board **P201** has failed.

Furthermore, the configuration of the full-wave rectifier unit **211** and the smoothing capacitor **C212** are the same as the full-wave rectifier unit **11** and the smoothing capacitor **C12,** respectively, shown in **FIG 1** and described in the first embodiment. Namely, the full-wave rectifier unit **211** comprises a plurality of diodes arranged in a bridge. When the power supply voltage *Vac* (specifically, the AC voltage) is input from the external power supply **10,** which is the commercial power supply, the full-wave rectifier unit **211** rectifies the power supply voltage *Vac* and outputs it to a first wiring **L21** and a second wiring **L22.** The end parts of the smoothing capacitor **C212** are connected to the first wiring **L21** and the second wiring **L22** in a stage after the full-wave rectifier unit **211.** The smoothing capacitor **C212** converts the power supply voltage *Vac* that has been rectified by the full-wave rectifier unit **211** to the DC voltage *Vdc.* The DC voltage *Vdc* is output to the motor apparatus **250** via the first wiring **L21** and the interface **IF201** of the printed circuit board **P201,** and is used as the power supply voltage impressed on the motor **251.**

### (2) Configuration of the Determination Support Apparatus

In the determination support apparatus **213** according to the present embodiment, if the motor driver IC **252** has determined that the motor **251** is in the faulty rotation state, then whether the failure factor is on the motor apparatus **250** side or on the printed circuit board **P201** side is automatically determined. The determination support apparatus **213** principally comprises an operating power supply unit **214,** a voltage detection unit **215,** a microcomputer **218** (which corresponds to a failure factor determination unit), a cutoff unit **231,** and a light emitting diode **219** (which corresponds to a determination result notification unit). Furthermore, the configuration of the operating power supply unit **214** is the same as that of the operating power supply unit **14** shown in **FIG 1** and described in the first embodiment. Namely, the operating power supply unit **214** comprises a switching power supply. The operating power supply unit **214** generates the operating power supply of the motor driver IC **252** using the power supply voltage *Vac* output from the external power supply **10,** and supplies the operating power supply to the motor apparatus **250** via a third wiring **L23.**

The voltage detection unit **215** comprises two resistors **R216a**, **R216b,** which are connected in series between the third wiring **L23** and the second wiring **L22** (which corresponds to the GND wiring), and a voltage detection circuit **217,** which amplifies the voltage at the connection point between the resistors **R216a, R216b** and A/D converts the amplified voltage. As in the first embodiment, when the motor driver IC **252** has determined that the motor **251** is in the faulty rotation state, the voltage detection unit **215** detects the voltage value *Vcc* of the operating power supply. Furthermore, after this determination has been made, the voltage detection unit **215** according to the present embodiment detects the voltage value *Vcc* of the operating power supply even if the cutoff unit **231** has disconnected the harness for supplying the operating power supply. Namely, in the present embodiment, if it has been determined that the motor **251** is in the faulty rotation state, then the voltage value *Vcc* of the operating power supply is not detected in the state wherein all the harnesses between the printed circuit board **P201** and the motor apparatus **250** have been detached, as in the first embodiment; rather, the voltage value *Vcc* of the operating power supply is detected in the state wherein only the harness for supplying the operating power supply is disconnected (specifically, the state wherein the harness connected to the third wiring **L23** is disconnected).

The microcomputer **218** comprises a CPU and memory, and is connected to the motor apparatus **250** via a fourth wiring **L24** and a fifth wiring **L25.** The microcomputer **218** has the function of the calculation unit **18** according to the first embodiment. Namely, the microcomputer **218** generates the velocity instruction signal *Vsp* of the motor **251** and outputs such to the motor apparatus **250** via the fourth wiring **L24.** When the microcomputer **218** acquires the rotational speed signal FG, which indicates the actual rotational speed of the motor **251,** via the fifth wiring **L25,** the microcomputer **218** performs so-called feedback control, wherein the microcomputer **218** corrects the velocity instruction signal *Vsp* based on the signal *FG.*

In addition, when the microcomputer **218** according to the present embodiment acquires the rotational speed signal *FG* that indicates that the motor **251** is in the faulty rotation state, the microcomputer **218** determines the failure factor based on the detection result of the voltage detection unit **215.** The determination of the failure factor refers to the determination of whether the faulty rotation factor of the motor **251** is caused by a failure on the motor apparatus **250** side or by a failure on the printed circuit board **P201** side. Furthermore, the detection result of the voltage detection unit **215** used when determining the failure factor includes the detection results in two states immediately after it has been determined that the motor **251** is in the faulty rotation state: the state wherein the cutoff unit **231** is ON and the state wherein the cutoff unit **231** is OFF. Namely, if it has been determined that the motor **251** is in the faulty rotation state, then the microcomputer **218** determines whether the failure factor is on the motor apparatus **250** side or on the printed circuit board **P201** side based on the output of the operating power supply unit **214** (i.e., the voltage value *Vcc* of the operating power supply) in the state wherein the operating power supply is being supplied to the motor driver IC **252** and the output of the operating power supply unit **214** (i.e., the voltage value *Vcc* of the operating power supply) in the state wherein the operating power supply is not being supplied to the motor driver IC **252.** Specifically, if the voltage value *Vcc* of the operating power supply is less than or equal to the prescribed value (i.e., *Vcc* ≤ prescribed value) when the operating power supply is being supplied to the motor driver IC **252** and, further, the voltage value *Vcc* of the operating power supply is less than or equal to the prescribed value (i.e., *Vcc* ≤ prescribed value) when the operating power supply is not being supplied to the motor driver IC **252**, then the microcomputer **218** determines that the failure is on the printed circuit board **P201** side. If the voltage value *Vcc* of the operating power supply is greater than the prescribed value (i.e., *Vcc* > prescribed value) when the operating power supply is being supplied to the motor driver IC **252 ,** or if the voltage value *Vcc* of the operating power supply is greater than the prescribed value (i.e., *Vcc* > prescribed value) when the operating power supply is not being supplied to the motor driver IC **252,** then the microcomputer **218** determines that the failure is on the motor apparatus **250** side.

In addition, the microcomputer **218** according to the present embodiment is connected to both the cutoff unit **231** and the light emitting diode **219.** The microcomputer **218** controls the ON/OFF state of a relay **232** (discussed below) in the cutoff unit **231** based on the detection result of the voltage detection unit **215,** and controls the emission of light of the light emitting diode **219** based on the result of the determination of the failure factor discussed above.

The cutoff unit **231** is capable of cutting off the supply of the operating power supply to the motor apparatus **250** (specifically, the motor driver IC **252),** and principally comprises the relay **232** and an N-ch transistor **Q21.** The relay **232** comprises a relay switch **232a** and a relay coil **232b.** Of the harnesses that connect the printed circuit board **P201** and the motor apparatus **250,** the relay switch **232a** is connected in series to the harness that is for supplying the operating power supply and that is connected to the third wiring **L23.** The relay switch **232a** supplies or cuts off the supply of the operating power to the motor apparatus **250** by assuming an ON state or an OFF state based on the voltage between both ends of the relay coil **232b.** One end of the relay coil **232b** is connected to a power supply of approximately 5 V, and an other end is connected to a collector of the N-ch transistor **Q21.** Accordingly, if the N-ch transistor **Q21** turns ON, then the voltage between both ends of the relay coil **232b** becomes 5 V, and therefore the relay switch **232a** transitions to the ON state. Furthermore, if the N-ch transistor **Q21** turns OFF, then a voltage does not arise between both ends of the relay coil **232b,** and consequently the relay switch **232a** transitions to the OFF state. The base of the N-ch transistor **Q21** is connected to the microcomputer **218,** and the emitter is grounded. Normally, namely, when the motor **251** is rotating normally in the steady state, the microcomputer **218** impresses an "H" voltage to the base of the N-ch transistor **Q21,** and consequently the N-ch transistor **Q21** turns ON. Conversely, if the voltage value *Vcc* of the operating power supply, which is the detection result of the voltage detection unit **215,** is less than or equal to the prescribed value in the state wherein the motor **251** is in the faulty rotation state and the operating power supply is being supplied to the motor apparatus **250** (i.e., the relay switch **232a** is ON), then the microcomputer **218** impresses an "L" voltage to the base of the N-ch transistor **Q21,** and consequently the N-ch transistor **Q21** switches from ON to OFF.

In particular, as shown in **FIG. 6****,** the cutoff unit **231** according to the present embodiment is located in a stage after the voltage detection unit **215,** namely, on the output side of the voltage detection unit **215.** Thereby, because the relay switch **232a** is OFF, the voltage detection unit **215** can detect the operating power supply output from the operating power supply unit **214** even if the supply of the operating power supply from the printed circuit board **P201** side to the motor apparatus **250** side has been cut off.

The light emitting diode **219** is connected to the microcomputer **218** and mounted on the printed circuit board **P201.** The light emitting diode **219** reports the determination result of the microcomputer **218,** namely, the failure factor. Specifically, the light emitting diode **219** emits light of a green color if the microcomputer **218** has determined that the failure is on the motor apparatus **250** side. The light emitting diode **219** emits light of a red color if the microcomputer **218** has determined that the failure is on the printed circuit board **P201** side. Namely, the light emitting diode **219** changes the color of the light emitted in accordance with whether the failure factor is on the motor apparatus **250** side or the printed circuit board **P201** side. Furthermore, if the motor **251** is not in the faulty rotation state, then the light emitting diode **219** emits light of a blue color. Thus, the serviceperson can ascertain visually—without having to make his or her own determination—by the color of the light emitted by the light emitting diode **219** whether the failure is on the motor apparatus **250** side or the printed circuit board **P201** side.

### (3) Operation

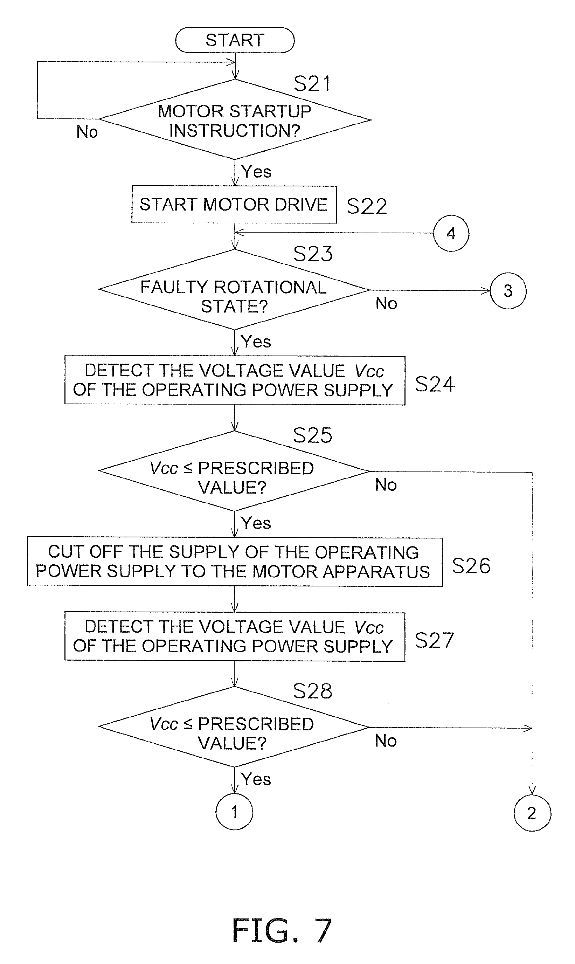

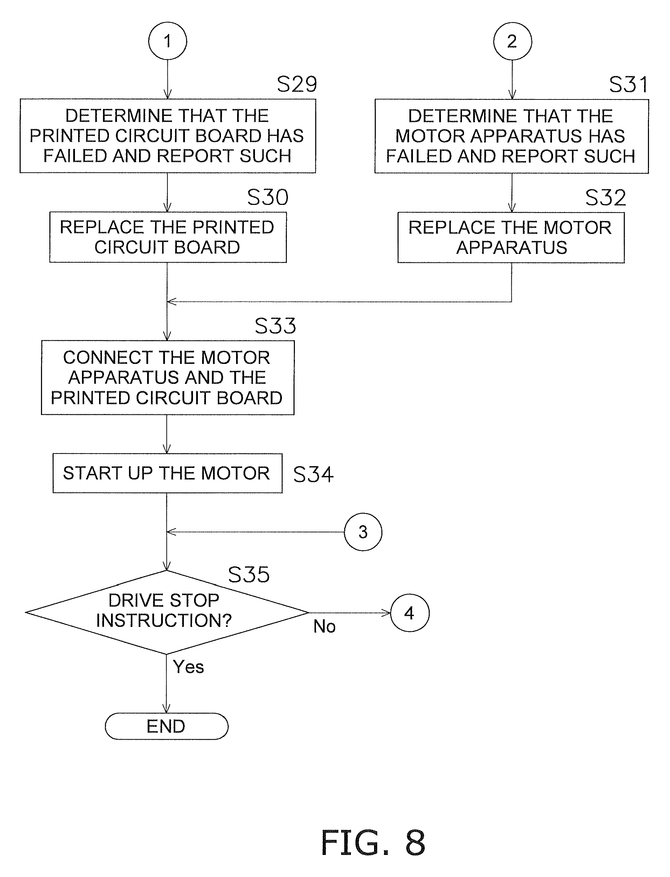

Next, the entire flow of the operation of the determination support apparatus **213** according to the present embodiment discussed above and a method of replacing the printed circuit board **P201** or the motor apparatus **250** will be explained, referencing **FIGS. 7****,** **8****.**

Steps **S21-S22**: As shown in **FIG. 6****,** the printed circuit board **P201** and the motor apparatus **250** are connected by the plurality of harnesses, and the operating power supply and the like are supplied from the printed circuit board **P201** to the motor apparatus **250.** In this state, if the motor drive apparatus **201** receives a startup instruction for the motor **251** from a separate microcomputer (not shown) inside the air conditioner (i.e., YES in **S21),** then the microcomputer **218** inside the motor drive apparatus **201** starts to output the velocity instruction signal *Vsp* to the motor apparatus **250.** The motor driver IC **252** of the motor apparatus **250** begins generating the drive voltages based on the velocity instruction signal *Vsp,* and thereby the motor **251** starts running (i.e., **S22).**

Steps **S23-S24**: When the motor **251** has started driving, the motor driver IC **252** generates the rotational speed signal *FG* while monitoring the rotational state of the motor **251.** If the motor **251** enters the faulty rotation state while driving, then the motor driver IC **252** outputs to the printed circuit board **P201** side the rotational speed signal *FG* that indicates that the motor **251** is in the faulty rotation state (i.e., YES in **S23).** At this time, the voltage detection unit **215** detects the voltage value *Vcc* of the operating power supply (i.e., **S24).**

Furthermore, if the motor **251** does not enter the faulty rotation state (i.e., NO in **S23),** then the motor driver IC **252** continues to output to the printed circuit board **P201** side the rotational speed signal *FG* that indicates the actual rotational speed of the motor **251.** Unless the microcomputer **218** receives a drive stop instruction for the motor **251** from the other microcomputer (i.e., NO in **S35),** the microcomputer **218** continues to output to the motor apparatus **250** the velocity instruction signal *Vsp* for causing the motor **251** to rotate in a steady state.

Steps **S25-527**: If, in the step **S23**, the motor driver IC **252** determines that the motor **251** is in the faulty rotation state, then the microcomputer **218** compares the voltage value *Vcc* of the operating power supply with the prescribed value. If the voltage value *Vcc* of the operating power supply is less than or equal to the prescribed value (i.e., YES in **S25),** then the relay switch **232a** of the cutoff unit **231** switches from the ON state to the OFF state, and thereby the supply of the operating power supply to the motor apparatus **250** is cut off (i.e., **S26).** Namely, the state obtains wherein, of the harnesses between the printed circuit board **P201** and the motor apparatus **250,** only the harness for the supply of the operating power supply is disconnected by the cutoff unit **231.** In this state, the voltage detection unit **215** once again detects the voltage value *Vcc* of the operating power supply (i.e., **S27).**

Steps **S28-S30**: If the voltage value *Vcc* of the operating power supply detected in the step **S27** is still less than or equal to the prescribed value (i.e., YES in **S28),** then it means that the operating power supply itself is low regardless of whether a load is applied to the operating power supply unit **214.** Consequently, the microcomputer 218 determines that it is the printed circuit board **P201** side—and not the motor apparatus **250** side—that has failed. Furthermore, the light emitting diode **219** emits light of a red color (i.e., **S29).** In this case, the serviceperson cuts off the supply of the power supply voltage *Vac* to the printed circuit board **P201,** detaches the plurality of harnesses between the printed circuit board **P201** and the motor apparatus **250,** and replaces only the printed circuit board **P201** (i.e., **S30).**

Steps **S31-S32**: In the step **S25,** if the voltage value *Vcc* of the operating power supply is greater than the prescribed value (i.e., NO in **S25),** then it means that the value *Vcc* of the operating power supply output from the operating power supply unit **214** is in the normal state, whereas the motor **251** is in the faulty rotation state. In addition, in the step **S28,** if the voltage value *Vcc* of the operating power supply is greater than the prescribed value (i.e., YES in **S28),** namely, if the operating power supply unit **214** is not being subject to a load despite the fact that the motor **251** is in the faulty rotation state, then it means that the operating power supply itself is in the normal state. Accordingly, if these states arise, then the microcomputer **218** determines that the motor apparatus **250** side has failed and the light emitting diode **219** emits light of a green color (i.e., **S31).** In this case, the serviceperson cuts off the supply of the power supply voltage *Vac* to the printed circuit board **P201,** detaches the plurality of harnesses between the printed circuit board **P201** and the motor apparatus **250,** and replaces only the motor apparatus **250** (i.e., **S32).**

Step **S33:** After replacing the motor apparatus **250** or the printed circuit board **P201,** the serviceperson connects the motor apparatus **250** and the printed circuit board **P201** with the plurality of harnesses (i.e., **S33),** as shown in **FIG. 6****,** and subsequently the power supply voltage *Vac* is applied to the printed circuit board **P201.**

Step **S34**: Subsequently, the microcomputer **218** of the motor drive apparatus **201** generates the velocity instruction signal *Vsp* and outputs the signal *Vsp* to the motor apparatus **250** in order to restart the motor **251.**

Step **S35:** The operations of the step **S23** and subsequent steps are performed repetitively (i.e., NO in **S35)** until a drive stop instruction for the motor **251** is sent from the microcomputer (not shown) on the air conditioner side. When a drive stop instruction for the motor **251** has been received, a velocity instruction signal *Vsp* for stopping the drive of the motor **251** is sent from the microcomputer **218** to the motor apparatus **250,** whereupon the motor **251** stops driving.

### (4) Effects

According to the determination support apparatus **213** of the present embodiment, if the motor **51** is in the faulty rotation state, then the relay switch **232a** of the cutoff unit **232** switches from the ON state to the OFF state, and thereby the supply of the operating power supply to the motor driver IC **252** is cut off. Furthermore, in the state wherein the operating power supply is not being supplied to the motor apparatus **250** (specifically, the motor driver IC **252),** the microcomputer **218** determines, based on the voltage value *Vcc* of the operating power supply output from the operating power supply unit **214,** whether the motor apparatus **250** side has failed or whether the printed circuit board **P201** side, whereon the operating power supply unit **214** is mounted, has failed. Because this determination result is reported via the state of the emission of light of the light emitting diode **219,** which is the determination result notification unit, the serviceperson can ascertain the failure factor of the faulty rotation state of the motor **251**—without determining whether it is on the printed circuit board **P201** side or on the motor apparatus **250** side—based on the color of the light emitted by the light emitting diode **219.** Accordingly, the serviceperson can promptly replace the failed motor apparatus **250** or printed circuit board **P201.**

### (5) Modified example

### (a)

The present embodiment explained the case wherein the failure factor notification unit is the light emitting diode **219.** However, the failure factor notification unit is not limited to a light emitting diode and may be anything that can report the failure factor to the serviceperson. Examples other than the light emitting diode include a display unit that is mounted on the printed circuit board **P201** and a display unit of a remote controller for an indoor unit of an air conditioner. In this case, a code, a message, or the like that reports the failure factor is displayed on the display unit. In addition, the failure factor is not limited to being reported visually and may be reported acoustically by speech, a buzzer, or the like, or may be reported by a combination of sound and, for example, a light emitting diode or a display unit.

In addition, the failure factor notification unit may comprise a plurality of light emitting diodes instead of only one. In such a case, the failure factor is reported based on the number of light emitting diodes that are emitting light.

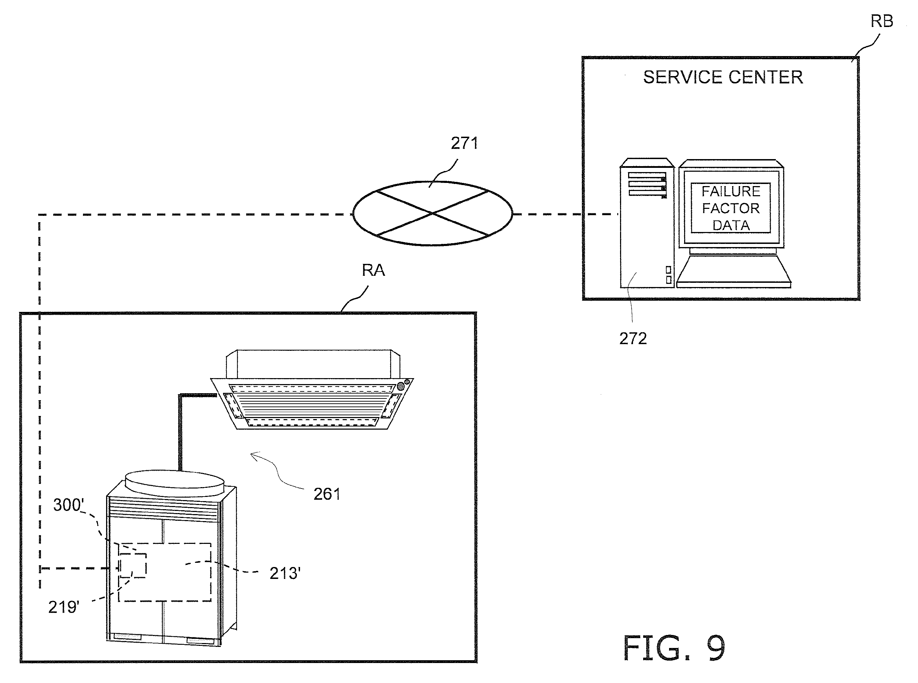

Furthermore, the failure factor notification unit may comprise a communication unit **219'** instead of a light emitting diode and the like. **FIG. 9** shows a conceptual diagram for such a case. In **FIG. 9****,** a motor drive system **300'** that comprises a determination support apparatus **213',** wherein the failure factor notification unit is the communication unit **219',** is used as a drive system of an outdoor fan of an air conditioner **261.** The air conditioner **261** is installed inside a building **RA,** which is other than a building **RB** wherein the service center is located. A terminal **272,** which is connected to the communication unit **219'** via a network **271,** is installed inside the service center, and failure factor data that is received via the communication unit **219'** is displayed on the terminal **272.** In other words, the failure factor in this case is sent, and thereby reported, from the communication unit **219'** to the service center side via the network **271** as data in the form of an email and the like. Thereby, a person inside the service center can ascertain that the printed circuit board or the motor apparatus inside the air conditioner **261** has failed without directly checking the determination support apparatus **213'** inside the air conditioner **261.** Accordingly, the serviceperson does not proceed to the building **RA** having received only a communication from the user of the air conditioner **261** that there is a risk of failure, but rather can respond more smoothly because the serviceperson can proceed to the building **RA with** prior knowledge of the failure factor.

### (b)

In addition, besides the failure factor notification unit discussed above, the determination support apparatus **213** according to the present embodiment may further comprise a detection result notification unit that reports that the voltage value *Vcc* of the operating power supply is less than or equal to the prescribed value, as in the light emitting diode **19** according to the first embodiment. Thereby, the serviceperson can determine whether the microcomputer **218** itself has failed based on the notification state of the detection result notification unit and the notification state of the failure factor notification unit.

### (c)

The present embodiment explained a case wherein the motor **251** and the motor driver IC **252** are provided inside the motor apparatus **250** (namely, the motor is a driver-integrated motor). However, the determination support apparatus **213** according to the present embodiment can also be adapted to the case wherein the motor and the motor driver are provided separately, as in the determination support apparatus **113** in **FIG 5** according to a modified example (c) of the first embodiment.

### (d)

In addition, the determination support apparatus **213** according to the present embodiment may further be provided with a relay that is connected in series to the wiring that connects the external power supply **10** and the printed circuit board **P201** together. When the motor **251** enters the faulty rotation state, this relay cuts off the supply of the power supply voltage *Vac* to the printed circuit board **P201** by temporarily turning OFF before the relay switch **232a** in the cutoff unit **231** switches from ON to OFF. Furthermore, this relay switches from OFF to ON after the relay switch **232a** has turned OFF. Thereby, the switching of the relay switch **232a** from ON to OFF is accomplished more safely. In addition, when it has been determined that either the printed circuit board **P201** or the motor apparatus **250** has failed, this relay automatically switches from ON to OFF, and thereby when the serviceperson replaces the motor apparatus **250** or the printed circuit board **P201** he or she herself does not need to cut off the supply of the external power supply **10** to the printed circuit board **P201,** and thus can perform the procedure safely.

### (e)

The present embodiment explained that the determination of whether the motor **251** is in the faulty rotation state is made based on the rotor position detection signals. However, the determination of whether the motor **251** is in the faulty rotation state may be made based on not only the rotor position detection signals, but also on, for example, the condensing temperature of the refrigerant circulating inside the refrigerant circuit that is configured inside the air conditioner.

In addition, the motor drive apparatus **201,** which comprises the determination support apparatus **213,** according to the present embodiment can also be adapted not only to an outdoor fan motor but also to a compressor motor.

### (f)

The operation of the determination support apparatus **213** discussed in **FIGS. 7****,** **8** of the present embodiment may be performed when the user invokes the performance of the operation. In this case, a selectable "auto-determination mode" button that executes the operation of the determination support apparatus **213** discussed in **FIGS. 7****,** **8** may be provided to the remote controller of the air conditioner that is used by the motor drive system **300** according to the present embodiment. The operation of the determination support apparatus **213** discussed in **FIGS. 7****,** **8** is performed only when the user has selected the "auto-determination mode" button.

### INDUSTRIAL APPLICABILITY

The failure factor determination support apparatus of the present invention has the effect of making it possible to avoid maintenance costs associated with the unnecessary replacement of the motor when the motor side has not failed. The determination support apparatus can be adapted as a support apparatus that determines the failure factor and that is located inside the motor drive apparatus of a fan motor related to an air conditioner. The board replacing method of the present invention has the effect of ensuring that the motor is replaced only when the motor needs to be replaced. The board replacing method can be adapted to the case wherein the failure occurs either in the motor or the printed circuit board, whereon the determination support apparatus is mounted, in a motor drive apparatus of, for example, a fan motor that comprises the abovementioned determination support apparatus.

### REFERENCE SIGNS LIST

- 1, 101,201: Motor drive apparatus
- 5, 250: Motor apparatus
- 10: External power supply
- 11, 111,211: Full-wave rectifier unit
- C12, C112, C212: Smoothing capacitor
- 13, 113,213,213': Failure factor determination support apparatus
- 14, 114,214: Operating power supply unit
- 15, 115, 215: Voltage detection unit
- R16a, R16b, R116a, R116b, R216a, R216b: Resistors
- 17, 117,217: Voltage detection circuit
- 18, 118: Calculation unit
- 19, 119, 219: Light emitting diode
- 51,151,251: Motor
- 52, 252: Motor driver IC
- 100, 200, 300, 300': Motor drive system
- 120: Gate drive circuit
- 121: Inverter
- 218: Microcomputer
- 231: Cutoff unit
- 219': Communication unit
- 271: Network
- 272: Terminal
- L1, L21: First wiring
- L2, L22: Second wiring
- L3, L23: Third wiring
- L4, L24: Fourth wiring
- L5, L25: Fifth wiring
- P1, P101, P201: Printed circuit board
- RA, RB: Buildings

### CITATION LIST

### PATENT LITERATURE

**Patent Document 1**
   Japanese Patent Unexamined publication No. 2001-268972

## Claims

1. A failure factor determination support apparatus **(13, 113, 213),** comprising:
an operating power supply unit **(14, 114, 214)** configured and arranged to apply an operating power supply (*Vcc*) to a drive control unit **(52, 118, 120, 121, 252)** that both controls the drive of a motor **(51, 151, 251)** and determines whether the motor **(51, 151, 251)** is in a faulty rotation state; and
a voltage detection unit **(15, 115, 215)** configured and arranged to detect a voltage value (*Vcc*) of the operating power supply at least when the drive control unit has determined that the motor **(51, 151, 251)** is in the faulty rotation state.

2. The failure factor determination support apparatus **(13, 113)** according to claim 1, further comprising:
a detection result notification unit **(19, 119)** configured and arranged to report the detection result when the detection result produced by the voltage detection unit **(15, 115)** is less than or equal to a prescribed value, reports such.

3. The failure factor determination support apparatus **(13, 113, 213)** according to claim 1 or claim 2, wherein
the voltage detection unit **(15, 115, 215)** has two resistors **(R16a, R16b, R116a, R116b, R216a, R216b)** that are connected to one another in series between an output wiring **(L3, L23)** of the operating power supply unit **(14, 114, 214)** and a GND wiring **(L2, L22)** corresponding to the output wiring.

4. The failure factor determination support apparatus **(213)** according to any one claim of claim 1 through claim 3, further comprising:
a cutoff unit **(231)** being configured and arranged to cut off the supply of the operating power supply to the drive control unit;
a failure factor determination unit **(218)** that, when the drive control unit **(252)** has determined that the motor is in the faulty rotation state, determines the failure factor based on the detection result of the voltage detection unit, which is the voltage value of the operating power supply that is output from the operating power supply unit **(214)** when the cutoff unit has cut off the supply of the operating power supply to the drive control unit; and
a determination result notification unit **(219)** configured and arranged to report the determination result of the failure factor determination unit **(218).**

5. A board replacing method wherein a printed circuit board (**P1, P101**) is replaced in a state wherein the printed circuit board (**P1**, **P101**), whereon at least the failure factor determination support apparatus **(13, 113)** according to any one claim of claim 1 through claim 3 is mounted, is connected to the motor **(51, 151),** comprising:
a first step **(S3),** which determines whether the motor **(51, 151)** is in a faulty rotation state;
a second step **(S4, S7),** which detects a voltage value (*Vcc*) of the operating power supply;
a third step **(S5),** which determines whether the voltage value of the operating power supply (*Vcc*) detected when it was determined that the motor **(51, 151)** is in the faulty rotation state is less than or equal to a prescribed value;
a fourth step **(S6),** which disconnects the printed circuit board **(P1, P101)** and the motor **(51, 151)** if the voltage value (*Vcc*) of the operating power supply is less than or equal to the prescribed value in the third step;
a fifth step (**S8**) that determines whether the voltage value (*Vcc*) of the operating power supply detected after the printed circuit board **(P1, P101)** and the motor **(51, 151)** have been disconnected is less than or equal to the prescribed value; and a sixth step **(S9),** which replaces the printed circuit board **(P1, P101)** if the voltage value (*Vcc*) of the operating power supply is less than or equal to the prescribed value in the fifth step.
